Europäisches Patentamt

European Patent Office

Office européen des brevets

(19)

(11) Publication number: **0 303 438**
A2

(12)

# EUROPEAN PATENT APPLICATION

(21) Application number: 88307342.1

(22) Date of filing: 09.08.88

(51) Int. Cl.⁴: **C 01 B 3/38**

(30) Priority: 14.08.87 US 85160

(43) Date of publication of application:
15.02.89 Bulletin 89/07

(84) Designated Contracting States:
AT BE CH DE ES FR GB GR IT LI LU NL SE

(71) Applicant: DAVY McKEE CORPORATION
2925 Briarpark Suite 700
Houston Texas 77042 (US)

(72) Inventor: Dunster, Michael
Folly Hill,15 Moreland Drive
Gerrards Cross (GB)

Korchnak,Joseph D
227 Birch Lane
Lakeland,Florida 33803 (GB)

(74) Representative: Eyles, Christopher Thomas et al
BATCHELLOR, KIRK & EYLES 2 Pear Tree Court
Farringdon Road
London, EC1R 0DS (GB)

(54) Production of synthesis gas from hydrocarbonaceous feedstock.

(57) Hydrocarbonaceous feedstocks are converted to synthesis gas by a catalytic partial oxidation process wherein a mixture of hydrocarbonaceous feedstock, oxygen or an oxygen-containing gas and, optionally, steam is provided to a catalytic partial oxidation zone at a temperature not lower than 93°C below its autoignition temperature and at an oxygen-to-carbon molar ratio from 0.3:1 to 0.8:1. The catalytic partial oxidation zone contains a catalyst having a geometric surface area-to-volume ratio of at least 5 $cm^2/cm^3$, preferably greater than 20 $cm^2/cm^3$. The catalyst volume requirements are comparatively low inasmuch as space velocities which are from about 20,000 $hr.^{-1}$ to 500,000 $hr.^{-1}$.

EP 0 303 438 A2

# Description

## PRODUCTION OF SYNTHESIS GAS FROM HYDROCARBONACEOUS FEEDSTOCK

### BACKGROUND OF THE INVENTION

#### Field of the Invention

The present invention relates to the production of synthesis gas from gaseous or vaporizable hydrocarbonaceous feedstocks. In particular, the invention relates to the preparation of synthesis gas by the catalytic partial oxidation of hydrocarbonaceous feedstocks under conditions which allow efficient conversion at relatively low temperatures and low oxygen demand. Furthermore, the process of the invention uses equipment which is less expensive than equipment previously employed in the oxidation of hydrocarbonaceous feedstocks.

#### Description of the Prior Art

The conversion of hydrocarbonaceous feedstocks, such as natural gases recovered from sites near petroleum deposits, into industrially useful gases has been practiced for many years. Typically, such gases contain, as their major components, methane, ethane, propane and butane. Also included in the conversion, in some instances, may be low-boiling liquid hydrocarbons.

In order to convert hydrocarbonaceous feedstocks into industrially useful products such as ammonia, carbon monoxide, methanol, hydrogen and town gas, the feedstock is first converted into so-called synthesis gas, the principal constituents of which are carbon monoxide, hydrogen, methane and carbon dioxide. The synthesis gas is then subjected to a number of separation and/or conversion processes to obtain the desired end products.

The most commonly employed method for converting hydrocarbonaceous feedstocks to synthesis gas has been catalytic reforming. In this process, the hydrocarbonaceous feedstock is reacted with steam in the presence of a catalyst, usually a nickel-containing catalyst, at temperatures between about 650°C and 1040°C. The hydrocarbons react with steam under these conditions to produce carbon monoxide and hydrogen. Catalytic steam reforming is an expensive process to carry out. Not only is the nickel containing catalyst very expensive, but also, the reactions are highly endothermic. Consequently, a great deal of energy must be provided to drive the reaction to the desired products. Frequently, air is provided to the reforming reaction in order to provide energy through partial oxidation of hydrocarbons.

Partial oxidation of hydrocarbonaceous feedstocks represents one alternative to steam reforming in the production of synthesis gas. Most of the partial oxidation processes that have been employed commercially are non-catalytic processes. Non-catalytic partial oxidation reactions however, are relatively inefficient. They operate at high temperatures, i.e., in the range of 1,200°C to 1,540C° and require large amounts of oxygen. Typically, the oxygen-to-carbon ratio required in non-catalytic partial oxidation is greater than 0.8:1 and often greater than 1:1.

U.S. Patent 4,390,347 issued to Dille et al. describes a process for the production of synthesis gas by the non-catalytic partial oxidation of a liquid hydrocarbonaceous fuel. The hydrocarbonaceous feedstock is reacted with a free oxygen-containing gas in the presence of steam at an autogenously maintained temperature within the range of 925°C to 1650°C at a pressure in the range of about 100 to 2300 KPa absolute. The oxygen-to-carbon molar ratio is said to be from 0.7:1 to 1.5:1.

U.S. Patent 3,890,113 issued to Child et al., describes the production of a methane-rich stream in which non-catalytic partial oxidation of a hydrocarbonaceous feedstock is carried out in the presence of steam and oxygen. The ratio of free oxygen in the oxidant to carbon in the feedstock is in the range of 0.8:1 to 1.5:1. The product synthesis gas is subjected to a water gas shift reaction to increase the amount of hydrogen in the gas.

U.S. Patent 3,927,998 issued to Child et al., relates to the production of a methane rich stream by the partial oxidation of the hydrocarbonaceous fuel employing a steam to fuel weight ratio of 2.2:1 to 2.9:1 and an oxygen-to-carbon molar ratio of 0.8:1 to 0.84:1. The partial oxidation is carried out in the absence of catalysts. The synthesis gas is cooled and water, carbon dioxide, carbon and other impurities are removed. The hydrogen and carbon monoxide in the gas are reacted in a catalytic methanation zone to produce a methane-rich stream.

Conversion efficiency of partial oxidation processes can be improved by the use of catalysts. However, catalytic partial oxidation processes of the prior art generally employ very expensive catalyst materials. For example, U.S. Patent 4,087,259, issued to Fujitani et al., describes a process wherein a liquid hydrocarbonaceous feedstock is vaporized and then partially oxidized in contact with a catalyst consisting of rhodium supported on a carrier.

The use of catalysts in partial oxidation processes requires that the reaction be carried out within a specific range of "space velocity". Space velocity may be defined as the volumetric hourly rate of throughput per volume of catalyst. All figures quoted herein refer to the volumetric hourly rate at standard conditions of temperature and pressure. In order to obtain acceptable levels of conversion using catalytic partial oxidation processes of the prior art it has been necessary to use space velocities below about 12,000 hr.$^{-1}$ For example, U.S. Patent No. 4,522,894, issued to Hwang et al., describes the production of a hydrogen-rich gas to be used as fuel for the fuel cell. The process reacts a hydrocarbon feed with steam and an oxidant in an autothermal reformer using 2 catalyst zones. The total hourly space velocity is between 1,960 hr$^{-1}$ and 18,000 hr.$^{-1}$. Because the prior art processes must be carried out at low space velocity, catalytic partial oxidation reactors of the prior art have had to have large catalyst beds in order to achieve the throughputs desired in commercial operation. This increases the size and cost of the partial oxidation reactor.

It is an object of the present invention to provide a catalytic partial oxidation process which allows for the efficient conversion of hydrocarbonaceous feedstocks to synthesis gas at relatively high space velocities, on the order of about 20,000 hr.$^{-1}$ or higher, so that the size of the catalyst bed and the partial oxidation reactor can be kept to a minimum while still obtaining commercially acceptable throughputs.

It is a further object of the present invention to provide a catalytic partial oxidation process which converts hydrocarbonaceous feedstocks to synthesis gas with a relatively low oxygen demand, thereby increasing throughput of hydrocarbonaceous feedstocks.

It is yet a further object of the invention to provide a catalytic partial oxidation process which allows for the use of relatively inexpensive catalysts.

## SUMMARY OF THE INVENTION

The present invention provides a catalytic partial oxidation process for converting gaseous or vaporizable hydrocarbonaceous feedstock to synthesis gas. The process of the invention operates efficiently at low oxygen demand. The processing conditions and type of catalyst employed allow the process to be carried out at high space velocity.

The process of the invention comprises:

(a) introducing to a catalytic partial oxidation zone a gaseous mixture of a hydrocarbonaceous feedstock, oxygen or an oxygen-containing gas and, optionally, steam in which the steam-to-carbon molar ratio is from 0:1 to 3.0:1 and the oxygen-to-carbon molar ratio is from 0.3:1 to 0.8:1, said mixture being introduced to the catalytic partial oxidation zone at a temperature not lower than 93°C below its autoignition temperature and preferably at or above its autoignition temperature; and

(b) partially oxidizing the hydrocarbonaceous feedstock in the catalytic partial oxidation zone to produce a gas consisting essentially of methane carbon oxides, hydrogen and steam by passing the mixture through a catalyst capable of catalyzing the oxidation of the hydrocarbons, said catalyst having a ratio of surface area to volume of at least 5 cm$^2$/cm$^3$.

The process of the invention can be carried out using, as a catalyst, inexpensive materials not previously considered to have useful catalytic activity.

The process can be carried out at high space velocities, on the order of 20,000 hr.$^{-1}$ to 500,000 hr.$^{-1}$ thus allowing for high throughputs using a relatively small catalytic partial oxidation reactor.

## BRIEF DESCRIPTION OF DRAWINGS

Fig. 1 is an elevated cross-section view of a reactor having at its input a mixer and distributor suitable for introducing the reactants to the catalyst bed.

Fig. 2 is an enlarged elevational cross-section view of a broken-away portion of the mixer and distributor of Fig. 1.

Fig. 3 is a top view of a broken-away quarter section of the mixer and distributor of Fig. 1.

Fig. 4 is a bottom view of a broken-away quarter section of the mixer and distributor of Fig. 1.

Fig. 5 is a diagrammatic elevational cross-sectional illustration of a broken-away portion of the mixer and feeder of Figs. 1 and 2 showing critical dimensions.

Fig. 6 is a graph plotting oxygen-to-carbon molar ratios vs. steam-to-carbon molar ratio for three different operating temperatures at an operating pressure of 2760 KPa.

Fig. 7 is a graph plotting the hydrogen-to-carbon monoxide molar ratio in the catalytic partial oxidation reaction product vs. The steam-to-carbon molar ratio for three different operating temperatures at an operating pressure of 2760 KPa.

Fig. 8 is a graph plotting the volume % methane in the catalytic partial oxidation product vs. the steam-to-carbon molar ratio for three different operating temperatures at an operating pressure of 2760 KPa.

Fig. 9 is a graph plotting the volume % carbon dioxide in the catalytic partial oxidation product for three different operating temperatures at an operating pressure of 2760 KPa.

Fig. 10 is a graph plotting the molar ratio of total hydrogen and carbon monoxide in the product to total hydrogen and carbon in the feedstock for three different operating temperatures at an operating pressure of 2760 KPa.

## DETAILED DESCRIPTION OF THE INVENTION

The process of the present invention can be used to produce synthesis gas from any gaseous or low-boiling hydrocarbonaceous feedstock. Typically, a gaseous hydrocarbonaceous feedstock used to produce synthesis gas is natural gas having the following approximate composition: methane, 93%; ethane, 5%; propane 1.5%; butane and higher hydrocarbons, 0.5%.

Little reforming reactions take place in the process of the invention; that is, the process of the invention relies essentially on partial oxidation to convert hydrocarbonaceous feedstock to synthesis gas. The process of the invention can be employed to convert hydrocarbonaceous feedstock to synthesis gas, in the absence of reforming reactions, with very low levels of hydrocarbon slippage (unreacted feedstock), i.e. as low as 2% or lower, if desired. For some end uses, e.g. the production of town gas, it may be desired to allow significantly higher levels of hydrocarbon slippage and this can also be accomplished in accordance with the process of the invention. Because the rate of conversion in the partial oxidation reaction can be mass transfer controlled independently of the chemical nature of the catalyst employed, the process of the invention can be carried out efficiently using relatively inexpensive catalyst materials, provided that the surface area-to volume requirements of the invention are met.

In accordance with the process of the invention the reactant gases are introduced to the reaction zone, i.e. the catalyst bed, at an inlet temperature not lower than 93°C less than the autoignition temperature of the feed mixture. Preferably the reactant gases are introduced at a temperature at or above the autoignition temperature of the mixture. A further essential feature of the invention is that the reactants shall be completely mixed prior to the reaction. Introducing the thoroughly mixed reactant gases at the proper temperature ensures that the partial oxidation reactions will be mass transfer controlled. Consequently, the reaction rate is relatively independent of catalyst activity, but dependent on the surface-area-to-volume ratio of the catalyst. It is possible to use any of a wide variety of materials as a catalyst, provided that the catalyst has the desired surface-area-to-volume ratio. It is not necessary that the catalyst have specific catalytic activity for the steam reforming reaction. Even materials normally considered to be non-catalytic can promote the production of synthesis gas under the reaction conditions specified herein when used as a catalyst in the proper configuration. The term "catalyst", as used herein, is intended to encompass such materials.

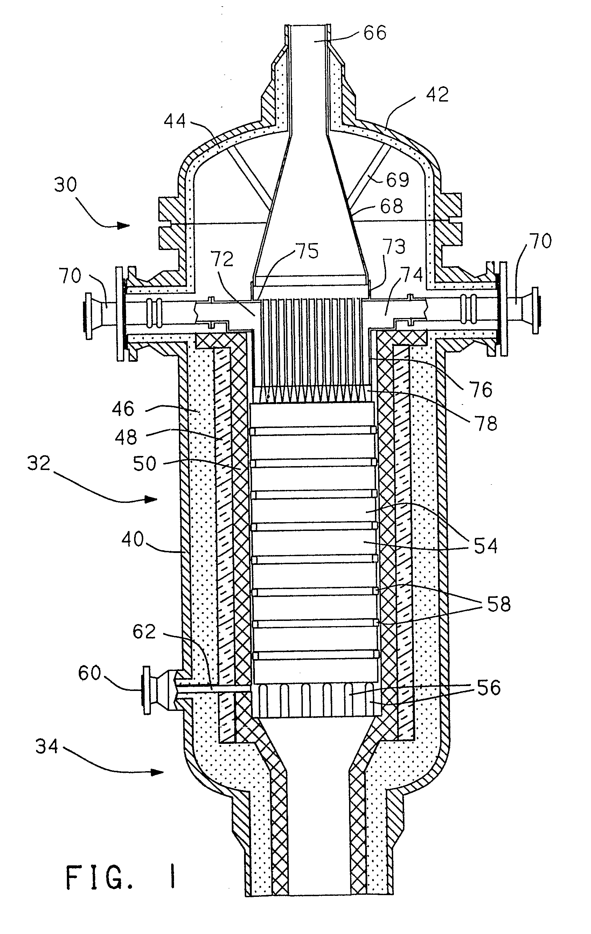

The process of the invention can be understood with reference to the figures. The catalytic partial oxidation zone is typically the catalyst bed of a reactor such as that illustrated in Fig. 1. As shown in Fig. 1, a reactor for partially oxidizing a gaseous feedstock includes an input mixing and distributor section indicated generally at 30. The mixer and distributor mixes the feedstock with an oxidant and distributes the mixture to the entrance of a catalytic reactor section indicated generally at 32 wherein the feedstock is partially oxidized to produce a product which is then passed through the exit section indicated generally at 34.

The reactor includes an outer shell 40 of structural metal such as carbon steel with a top 42 secured thereon by bolts (not shown) or the like. A layer 43 of insulation, such as 2300°F (1260°C) BPCF ceramic fiber insulation, is secured to the inside of the upper portion of the shell 40 including the top 42. In the lower portion of the mixing section 30 in the reactor section 32 and outlet section 34, there are secured layers 46, 48 and 50 on the inside of the shell. The layer 46 is a castable or equivalent insulation such as 2000°F (1090°C) ceramic insulation. The layer 48 is also a castable or equivalent layer of insulation but containing 60% alumina for withstanding 3000°F (1650°C). The internal layer 50 is a refractory or equivalent layer such as 97% alumina with ceramic anchors or 97% alumina brick for withstanding the interior environment of the reactor section.

The catalytic reactor section 32 contains one or more catalyst discs 54. As shown, the reactor contains a sequence of discs 54 separated by high alumina rings 58 between each adjacent pair of discs. The stack is supported by a grill with high alumina bars 56. A sample port 60 is formed in the lower end of the reaction section and has a tube, such as type 309 stainless steel tube 62 extending below the bottom refractory disc 54 for withdrawing samples of the product.

The outlet section 34 is suitably formed for being connected to a downstream heat recovery boiler (not shown) and/or other processing equipment.

The catalyst comprises a high surface area material capable of catalyzing the partial oxidation of the hydrocarbonaceous feedstock. The catalyst is in a configuration that provides a surface area to volume ratio of at least 5 $cm^2/cm^3$. Preferably, the catalyst has a geometric surface area to volume ratio of at least 20 $cm^2/cm^3$. While there is no strict upper limit of 20 surface area to volume ratio, it normally does not exceed about 40 $cm^2/cm^3$. A wide variety of materials can be used in the construction of the catalyst including materials not normally considered to have catalytic activity, provided that the catalyst configuration has the desired surface area to volume ratio.

The catalyst disc 54 can be, for example, a monolithic structure having a honeycomb type cross-sectional configuration. Suitable monolithic structures of this type are produced commercially, in sizes smaller than those used in the process of the invention, as structural substrates for use in the catalytic conversion of automobile exhausts and as catalytic combustion chambers of gas turbines or for catalytic oxidation of waste streams. Typically, the monolithic structure is an extruded material containing a plurality of closely packed channels running through the length of the structure to form a honeycomb structure. The channels are typically square and may be packed in a density as high as 186 per square centimeter of cross section. The monolithic structure can be constructed of any of a variety of materials, including cordierite ($MgO/Al_2O_3/SiO_2$), Mn/MgO cordierite (Mn-$MgO/Al_2O_3/SiO_2$), mullite

(Al$_2$O$_3$/SiO$_2$), mullite aluminum titanate (Al$_2$O$_3$/SiO$_2$-(Al,Fe)$_2$O$_3$/TiO$_2$), zirconia spinel (ZrO$_2$/MgO/Al$_2$O$_3$), spinel (MgO/Al$_2$O$_3$), alumina (Al$_2$O$_3$) and igh nickel alloys. The monolithic catalyst may consist solely of any of these structural materials, even though these materials are not normally considered to have catalytic activity by themselves. Using honeycombed substrates, surface area to volume ratios up to 40 cm$^2$/cm$^3$ or higher can be obtained. Alternatively, the monolithic substrate can be coated with any of the metals or metal oxides known to have activity as oxidation catalysts. These include, for example, palladium, platinum, rhodium, irridium, osmium, ruthenium, nickel, chromium, cobalt, cerium, lanthanum and mixtures thereof. Other metals which can be used to coat the catalyst disc 54 include noble metals and metals of groups IA, IIA, III, IV, VB, VIB, or VIIB or the 25 periodic table of elements.

The catalyst discs 54 may also consist of structural packing materials, such as that used in packing absorption columns. These packing materials generally comprise thin sheets of corrugated metal tightly packed together to form elongate channels running therethrough. The structural packing materials may consist of corrugated sheets of metals such as high temperature alloys, stainless steels, chromium, magnanese, molybdenum and refractory materials. These materials can, if desired, be coated with metals or metal oxides known to have catalytic activity for the oxidation reaction, such as palladium, platinum, rhodium, irridium, osmium, ruthenium, nickel, chromium, cobalt, cerium, lanthanum and mixtures thereof.

The catalyst discs 54 can also consist of dense wire mesh, such as high temperature alloys or platinum mesh. If desired, the wire mesh can also be coated with a metal or metal oxide having catalytic activity for the oxidation reaction, including palladium, platinum, rhodium, irridium, osmium, ruthenium, nickel, chromium cobalt, cesium, lanthanum and mixtures thereof.

The surface area to volume ratio of any of the aforementioned catalyst configurations can be increased by coating the surfaces thereof with an aqueous slurry containing about 1% or less by weight or particulate metal or metal oxide such as alumina, or metals of groups IA, IIA, III, IV, VB, VIB and VIIB and firing the coated surface at high temperature to adhere the particulate metal to the surface, but not so high as to cause sintering of the surface. The particles employed should have a BET (Brunnauer-Emmett-Teller) surface area greater than about 10 m$^2$/gram, preferably greater than about 200 m$^2$/gram.

In the practice of the invention, a gaseous mixture of hydrocarbonaceous feedstock, oxygen or an oxygen-containing gas such as air, and, optionally, steam is introduced into the catalytic partial oxidation zone at a temperature not lower than 93°C below its autoignition temperature. Preferably, the gaseous mixture enters the catalytic partial oxidation zone at a temperatue equal to or greater than its autoignition temperature. It is possible to operate the reactor in a mass transfer controlled mode with the reactants entering the reaction zone at a temperature somewhat below the autoignition temperature since the heat of reaction will provide the necessary energy to raise the reactant temperature within the reaction zone. In such a case, however, it will generally be necessary to provide heat input at the entrance to the reaction zone, for example by a sparking device, or by preheating the contents of the reactor, including the catalyst, to a temperature in excess of the autoignition temperature prior to the introducing of the reactants to initiate the reaction. If the reactant temperature at the input to the reaction zone is lower than the autoignition temperature by more than about 93°C, the reaction becomes unstable.

When the reactant mixture enters the catalytic partial oxidation zone at a temperature exceeding its autoignition temperature, it is necessary to introduce the mixture to the catalyst bed immediately after mixing; that is, the mixture of hydrocarbonaceous feedstock and oxidant should preferably be introduced to the catalyst bed before the autoignition delay time elapses. It is also essential that the gaseous reactants be thoroughly mixed. Failure to mix the reactants throughly reduces the quality of the product and can lead to overheating. A suitable apparatus for mixing and distributing the hydrocarbonaceous feedstock and oxygen or oxygen-containing gas so as to provide thorough mixing and to introduce the heated reactants into the reaction zone in a sufficiently short time is illustrated in Figs. 1-5.

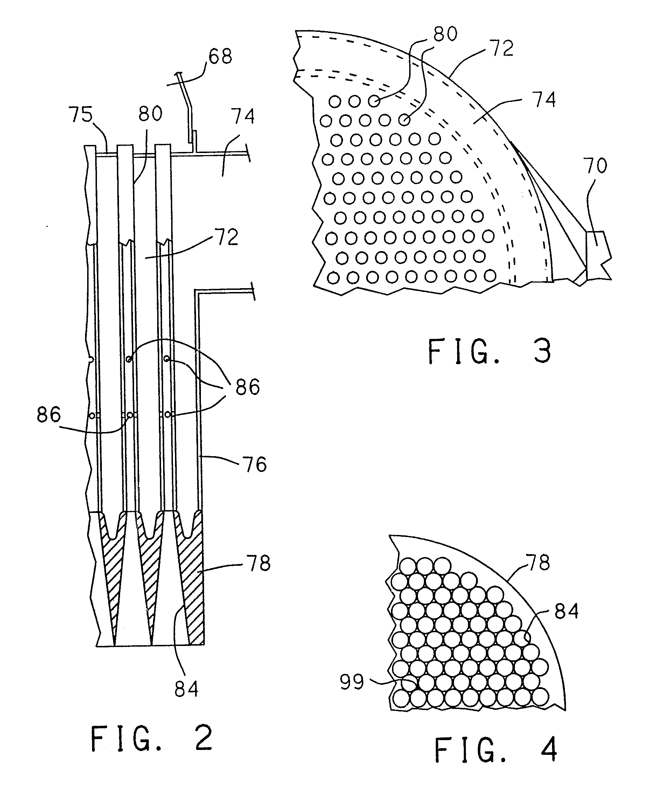

Referring to Fig. 1, one of the feed gases, i.e. hydrocarbonaceous gas or oxygen-containing gas, is introduced into the input section 30 through a first inlet port 66 through the top 42 which communicates to an upper feed cone 68 which forms a first chamber. The cone 68 is fastened by supports 69 in the top 42. The other feed gas is introduced into the input section 30 through second inlets 70 extending through side ports of the shell 40 and communicating to a second chamber 72 which is interposed between the upper chamber 68 and the inlet of the catalyst reaction section 32. A ring 73 mounted 5 on the central portion of an upper wall 75 of the chamber 72 sealingly engages the lower edge of the cone 68 so that the wall 82 forms a common wall between the upper chamber 68 and lower chamber 72. The chamber 72 has an upper outer annular portion 74, see also Figs. 2 and 3, which is supported on the top surface of the refractory layer 50. A lower portion of the chamber 72 has a tubular wall 76 which extends downward in the refractory sleeve 50. The bottom of the chamber 76 is formed by a cast member 78.

Optionally, steam can be introduced into either or both of the hydrocarbonaceous feedstock and oxygen or oxygen-containing gas, as indicated by the dotted arrows in Fig. 1. The gases are fed to the reactor in relative proportions such that the steam-to-carbon molar ratio is from 0:1 to 3.0:1, preferably from 0.3:1 to 2.0:1. The oxygen-to-carbon ratio is from 0.3:1 to 0.8:1, preferably from 0.45:1 to 0.65:1. If it is desired to use the resulting synthesis gas in the production of town gas, then the preferred oxygen-to-carbon molar ratio is from 0.3:1 to 0.65:1. For most other uses, such as the production of ammonia, methanol, hydrogen and carbon monoxide, the preferred oxygen-to-carbon molar ratio is from 0.4:1 to 0.8:1.

The reactant mixture preferably enters the catalytic reactor section 32 at a temperature at or above its autoignition temperature. Depending on the particular proportions of reactant gases, the reactor operating pressure and the catalyst used, this will generally be between about 290°C and 590°C. Preferably, hydrocarbonaceous feedstock and steam are admixed and heated to a temperature from 340°C to 650°C prior to passage through inlet port(s) 70 or 66. Oxygen or oxygen-containing gas, such as air, is heated to a temperature from 65°C to 650°C and passes through the other inlet port(s) 66 or 70.

Referring to Fig. 2, the mixing and distributing means comprises a plurality of elongated tubes 80 having upper ends mounted in the upper wall 75 of the chamber 72. The lumens of the tubes at the upper end communicate with the upper chamber 68. The bottom ends of the tubes 80 are secured to the member 78 with the lumens of the tubes communicating with the upper ends of passageways 84 formed vertically through the member 78. Orifices 86 are formed in the walls of the tubes 80 for directing streams of gas from the chamber 72 into 15 the lumens of the tubes 80. The inlets 66 and 70, the cone 68, the supports 69 are formed from a conventional corrosion and heat resistant metal while the chamber 72, tubes 80 and member 78 are formed from a conventional high temperature alloy or refractory type material.

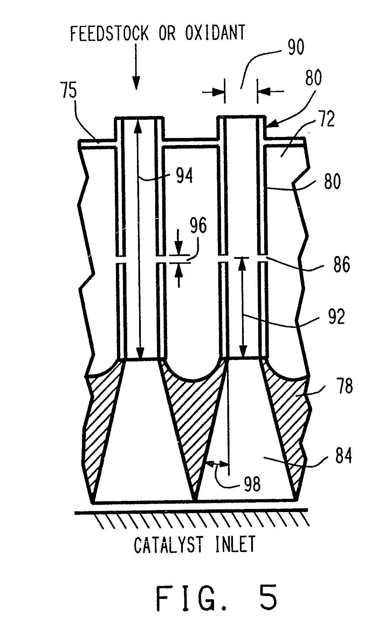

The number of tubes 80, the internal diameter 90 (see Fig. 5) of the tubes 80, the size and number of the orifices 86 in each tube are selected relative to the gas input velocities and pressures through inlets 66 and 70 so as to produce turbulent flow within the tubes 80 at a velocity exceeding the flashback velocity of the mixture. The minimum distance 92 of the orifices 86 from the bottom end of the tube 80 at the opening into the diverging passageways 84 is selected to be equal to or greater than that required for providing substantially complete mixing of the gas streams from chamber 68 and 72 under the conditions of turbulence therein. The size of the internal diameter 90 of the tubes 80 as well as the length 94 of the tubes is designed to produce a sufficient pressure drop in the gas passing from the chamber 68 to the reaction chamber so as to provide for substantially uniform gas flow through the tubes 80 from the chamber 68. Likewise the size of the orifices 86 is selected to provide sufficient pressure drop between the chamber 72 and the interior of the tubes 80 relative to the velocity and pressures of the gas entering through inlets 70 so as to provide substantially uniform volumes of gas flows through the orifices 86 into the tubes 80.

The diverging passageways in the member 78 are formed in a manner to provide for reduction of the velocity of the gas to produce uniform gas distribution over the inlet of the catalyst. The rate of increase of the cross-section of the passageway 84 as it proceeds downward, i.e., the angle 98 that the wall of the passageway 84 makes with the straight wall of the tubes 80, must generally be equal to or less than about 15° and preferably equal to or less than 7° in order to minimize or avoid creating vortices within the passageways 84. This assures that the essentially completely mixed gases, at a temperature near to or exceeding the autoignition temperature, will pass into the catalyst bed in a time preferably less that autoignition delay time. The configuration of the bottom end of the passageways, as shown in Fig. 4, is circular.

The product gas exiting the outlet section 34 consists essentially of methane, carbon oxides, i.e. carbon monoxide and carbon dioxide, hydrogen and steam. Trace amounts of $C_2$- and higher hydrocarbons may be present in the product gas. As used herein "trace amounts" means less than about 0.1% by weight.

The catalytic partial oxidation reaction is preferably carried out in the catalytic reaction section 32 at a pressure greater than 690 KPa, more preferably at a pressure greater than 1724 KPa. The catalytic partial oxidation reaction is carried out at a temperature between about 760°C and 1090°C.


EXAMPLE


Natural gas is converted to synthesis gas in a catalytic partial oxidation reactor of the construction shown in Fig. 1. There are included nine catalyst discs 54, each having a diameter of 30 inches (0.76m) and a thickness of 10 inches (0.25m). The discs are formed from a honeycomb monolith of cordierite material with a geometric surface area of approximately 25 $cm^2/cm^3$. A high surface area alumina layer is deposited on the cordierite to serve as a support upon which finely dispersed catalytic metal components are distended. The catalytic metal components are approximately 50% by weight platinum and 50% by weight palladium. Space velocity of the catalyst is 97,000 $hr.^{-1}$

Natural gas (>95% methane) is mixed with steam at various steam-to-carbon molar ratios, heated and supplied through 25.4-centimeter diameter inlet 66 at a pressure of 2760 KPa. Air is heated and supplied through two 20.3-centimeter inlets 70 at a pressure of 2830 KPa. The diameter of the lower portion 76 of the chamber 72 is 27 inches (0.68m) with the diameter of the upper portion 74 being 36 inches (0.91m). There are 261 tubes 80 having 0.5 inch (12.7mm) internal diameters and having lengths of 20 inches (0.51m). Six orifices 86 of 0.123-inch (3.2mm) diameter are formed in each tube with four of the orifices evenly spaced around each tube at a distance of 4 inches (0.102m) above the lower end of the tube and with the remaining two orifices formed opposite each other at a distance 6 inches (0.152m) above the lower end of the tube. The bottom member 78 has a thickness of 5 inches (0.127m) and the passageway sections 84 are conical with upper diameters of 0.5 inches (12.7 mm) and lower diameters of 1.75 inches (44.5mm). Pressures within the chambers 68 and 72 are maintained at essentially the inlet pressures.

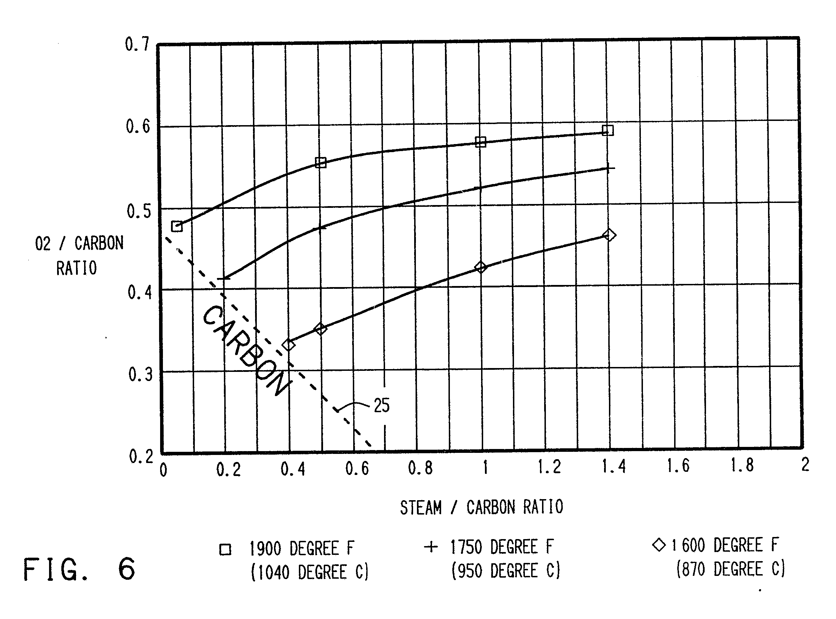

The temperature of the mixed reactant gases is 590°C Fig. 6 shows oxygen consumption for the above process, as function of steam-to-carbon molar ratio, for reaction temperatures of 870°C, 950°C and 1040°C and an operating pressue of 2760 KPa. It can be seen from the graph that oxygen consumption, expressed as oxygen-to-carbon molar ratio, is relatively low for the process of the invention as compared with present commercial partial oxidation processes. The dashed line 25 in Fig. 6 represents the conditions under which carbon deposits are formed, and particularly, shows a generally linear function of temperature with respect to the steam-to-carbon molar ratio, including the range of 1040°C for a steam-to-carbon molar ratio of 0:1 to 870°C for a steam-to-carbon molar ratio of 0.4:1.

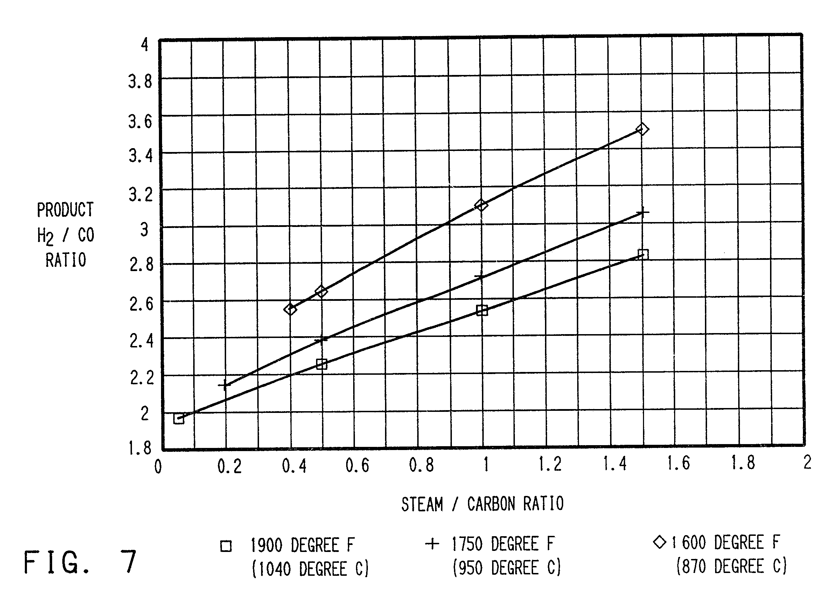

Fig. 7 shows the molar ratio of hydrogen, as $H_2$, to carbon monoxide in the product as a function of steam-to-carbon ratio for reaction temperatures of 870°C, 950°C and 1040°C.

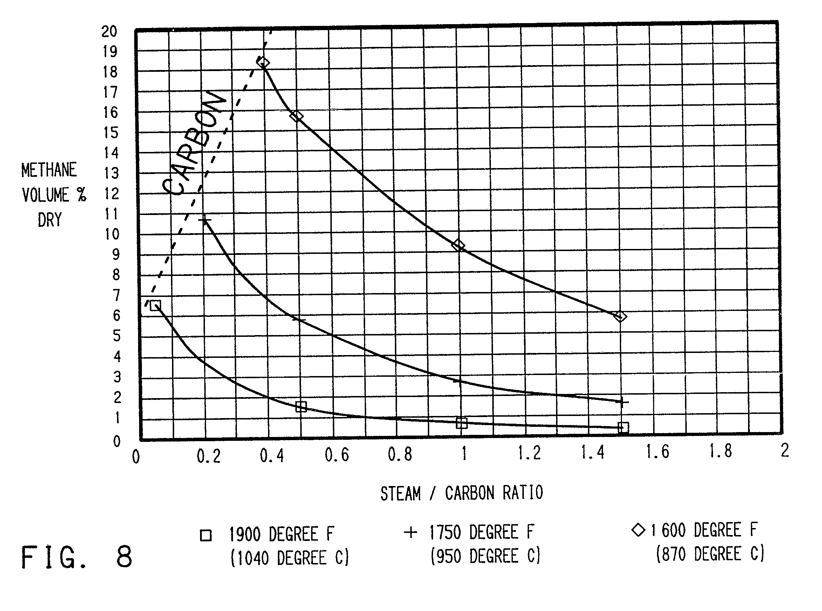

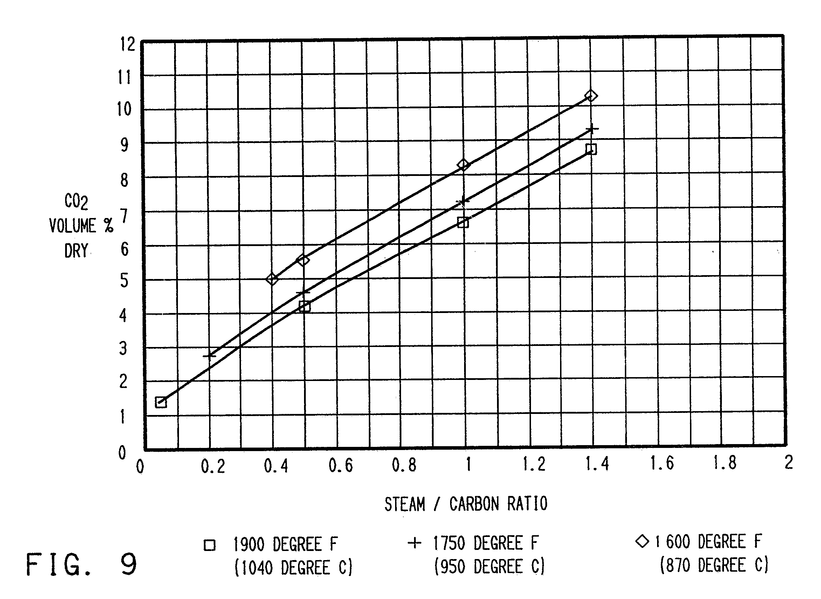

Figs. 8 and 9, respectively, show the amounts of methane and carbon dioxide, as volume %, in the product as a function of steam-to-carbon ratio for reaction temperatures of 870°C, 950°C and 1040°C.

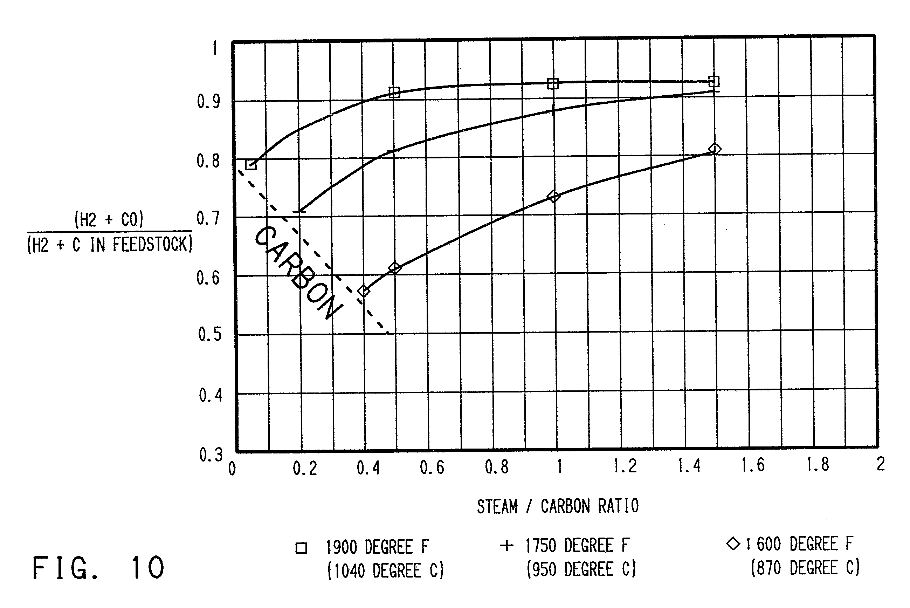

Fig. 10 shows the effective $H_2$ production of the process, expressed as total moles of $H_2$ and carbon monoxide in the product divided by total moles of $H_2$ and carbon in the feedstock.

Figs. 6-10 show that the process of the invention is capable of producing synthesis gas of a high level of efficiency and at low oxygen demand, using relatively low oxidation temperatures and relatively inexpensive catalyst materials. As those skilled in the art will be aware, numerous variations of the foregoing example will be possible within the scope of the invention. This example is intended only to illustrate the process of the invention and is not intended to limit its scope in any way.

## Claims

1. A process for producing synthesis gas from a hydrocarbonaceous feedstock by introducing to a catalytic partial oxidation zone an essentially completely mixed gaseous mixture of a hydrocarbonaceous feedstock, oxygen or an oxygen-containing gas and, optionally, steam; and partially oxidizing the hydrocarbonaceous feedstock in the catalytic partial oxidation zone to produce a gas consisting essentially of methane, carbon oxides, hydrogen and steam by passing the mixture through a catalyst capable of catalyzing the oxidation of the hydrocarbons; characterized in that the gaseous mixture has a steam-to-carbon molar ratio from 0:1 to 3.0:1, an oxygen-to-carbon molar ratio from 0.3:1 to 0.8:1, said mixture is introduced to the catalytic partial oxidation zone at a temperature not lower than 93°C below its autoignition temperature, and said catalyst has a ratio of geometric surface area to volume of at least 5 $cm^2/cm^3$.

2. A process as claimed in claim 1, characterized in that the gaseous reaction mixture passes through the catalyst with a space velocity from 20,000 $hr^{-1}$ to 500,000 $hr^{-1}$.

3. A process as claimed in claim 1 or claim 2, characterized in that the mixture is introduced into the partial oxidation zone at a temperature at least equal to its autoignition temperature.

4. A process as claimed in any one of claims 1 to 3, characterized in that the steam-to-carbon molar ratio in the gaseous mixture is from 0.3:1 to 2.0:1.

5. A process as claimed in any one of claims 1 to 4, characterized in that the oxygen-to-carbon molar ratio is from 0.45:1 to 0.65:1.

6. A process as claimed in any one of claims 1 to 5, characterized in that the catalyst has a geometric surface area to volume ratio from 20 $cm^2/cm^3$ to 40 $cm^2/cm^3$.

7. A process as claimed in any one of claims 1 to 6, characterized in that the temperature of the gaseous mixture at the inlet to the catalytic partial oxidation zone is from 340°C to 650°C.

8. A process as claimed in any one of claims 1 to 7, characterized in that the hydrocarbonaceous feedstock and steam are first admixed and heated to a temperature from 340°C to 650°C; and the resulting mixture is admixed with oxygen or oxygen-containing gas which has been heated to a temperature from 65°C to 650°C, thereby producing a mixture which will undergo autoignition; and introducing the mixture with oxygen to the inlet of the catalytic partial oxidation zone before the autoignition delay time of the mixture with oxygen elapses.

9. A process as claimed in any one of claims 1 to 8, characterized in that the catalyst comprises at least one monolithic structure having a honeycome cross-section, said structure comprising alumina, spinel, zirconia spinel, mullite aluminum titanate, mullite, Mn/MgO cordierite or cordierite.

10. A process as claimed in any one of claims 1 to 8, characterized in that said catalyst comprises wire mesh.

11. A process as claimed in any one of claims 1 to 8, characterized in that said catalyst comprises a structure substrate coated with a material selected from the group consisting of platinum, rhodium, irridium, osmium, ruthenium, palladium, nickel, chromium, cobalt, cerium, lanthanum and mixtures thereof.

12. A process as claimed in any one of claims 1 to 11, characterized in that the reaction temperature of the catalytic partial oxidation is from 760°C to 1090°C.

13. A process as claimed in any one of claims 1 to 12, characterized in that the pressure in the catalytic partial oxidation zone is greater than 690 KPa.

14. A process as claimed in any one of claims 1 to 13, characterized in that the pressure in the catalytic partial oxidation zone is greater than 1724 KPa.

15. A process as claimed in any one of claims 1 to 14, characterized in that the catalytic partial oxidation reaction is carried out in the essential absence of steam reforming reactions.

16. A process as claimed in claim 15, characterized in that the catalyst in the partial oxidation zone has essentially no catalytic activity for steam reforming.

17. A process as claimed in claim 15 or claim 16, characterized in that the hydrocarbon slippage is not greater than about 2%.

18. A process as claimed in any one of claims 1 to 17, characterized in that the hydrocarbonaceous feedstock is natural gas, the natural gas is mixed with steam in a steam-to-carbon molar ratio in the range from 0.3:1 to 2.0:1, the natural gas and steam are heated to a temperature in the range from 340°C to 650°C, the resulting mixture of natural gas and steam is admixed with oxygen or oxygen-containing gas which has been heated to a temperature from 65°C to 650°C, the mixture of natural gas, steam and oxygen are introduced to a catalytic partial oxidation zone before autoignition time delay elapses, the gaseous mixture passes through the catalyst with a space velocity from 20,000 $hr^{-1}$ to 500,000 $hr^{-1}$, and the gaseous mixture undergoes catalytic partial oxidation at a temperature in the range from 760°C to 1090°C to produce a synthesis gas consisting essentially of hydrogen, carbon oxides, steam and methane.

19. A process as claimed in claim 18, characterized in that the synthesis gas contains no more than 2% of unreacted natural gas.

20. A process as claimed in claim 18 or claim 19, characterized in that the partial oxidizing is performed at a temperature which is equal to or greater than a linear function of the steam-to-carbon molar ratio including the range from 1040°C for a steam-to-carbon molar ratio of 0:1 to 870°C for a steam-to-carbon molar ratio of 0.4:1.

FIG.  I

FIG. 3

FIG. 2

FIG. 4

FEEDSTOCK OR OXIDANT

CATALYST INLET

FIG. 5

FIG. 6

EP 0 303 438 A2

FIG. 7

EP 0 303 438 A2

METHANE VOLUME % DRY

CARBON

STEAM / CARBON RATIO

FIG. 8

□ 1900 DEGREE F (1040 DEGREE C)  + 1750 DEGREE F (950 DEGREE C)  ◇ 1600 DEGREE F (870 DEGREE C)

EP 0 303 438 A2

FIG. 9

□ 1900 DEGREE F
(1040 DEGREE C)

+ 1750 DEGREE F
(950 DEGREE C)

◇ 1600 DEGREE F
(870 DEGREE C)

EP 0 303 438 A2

FIG. 10

$$\frac{(H2 + CO)}{(H2 + C \text{ IN FEEDSTOCK})}$$

STEAM / CARBON RATIO

□ 1900 DEGREE F      + 1750 DEGREE F     ◇ 1 600 DEGREE F
(1040 DEGREE C)     (950 DEGREE C)     (870 DEGREE C)

EP 0 303 438 A2